# EUROPÄISCHE PATENTSCHRIFT

(11) **EP 0 923 626 B1**
(45) Veröffentlichungstag und Bekanntmachung des Hinweises auf die Patenterteilung: **15.12.1999**
(21) Anmeldenummer: 97919037.8
(22) Anmeldetag: 05.09.1997
(51) Int. Cl.: C09D 175/04

(54) **WÄSSRIGE ÜBERZUGSMITTEL, IHRE HERSTELLUNG UND VERWENDUNG BEI DER HERSTELLUNG VON MEHRSCHICHTLACKIERUNGEN**
AQUEOUS COATING AGENTS, THEIR PRODUCTION AND USE FOR PRODUCING MULTILAYERED ENAMEL COATINGS
REVETEMENTS AQUEUX, LEUR PRODUCTION ET LEUR UTILISATION POUR LA PRODUCTION DE PEINTURES MULTICOUCHES

(30) Priorität: 06.09.1996 DE 19636189
(43) Veröffentlichungstag der Anmeldung: 23.06.1999
(73) Patentinhaber: Herberts Gesellschaft mit beschränkter Haftung, 42285 Wuppertal (DE)
(72) Erfinder: VOGT-BIRNBRICH, Bettina, D-42719 Solingen (DE); GÖBEL, Armin, D-45549 Ha linghausen (DE); DÖBERT, Jürgen, D-45549 Sprockhövel (DE); BRUNNER, Marcus, D-42283 Wuppertal (DE)
(74) Vertreter: Türk - Gille - Hrabal - Struck
(86) Internationale Anmeldenummer: EP9704821
(87) Internationale Veröffentlichungsnummer: WO9810028

(56) Entgegenhaltungen:
- EP-A- 0 142 228
- EP-A- 0 353 797
- WO-A-91/17198
- WO-A-95/28428
- US-A- 4 369 300
- US-A- 5 230 962

## Beschreibung

Die Erfindung betrifft wäßrige Überzugsmittel, die wäßrige Bindemitteldispersionen auf der Basis von Hybridpolymeren enthalten, welche hergestellt werden durch radikalische Copolymerisation von Siloxanbrücken und/oder Silanolgruppen sowie olefinische Doppelbindungen enthaltenden Polyurethanharzen gemeinsam mit olefinisch ungesättigten Monomeren. Sie betrifft auch Verfahren zur Herstellung der wäßrigen Überzugsmittel und Verfahren zur Mehrschichtlackierung unter Verwendung dieser Überzugsmittel, insbesondere als Wasserbasislack in Verfahren zur Herstellung dekorativer Mehrschichtlackierungen vom Typ Wasserbasislack/Klarlack.

Polyurethan/Poly(meth)acrylat-Polymerhybride sind als Bindemittel für wäßrige Überzugsmittel bekannt.

Die EP-A-0 297 576 beschreibt die Polymerisation von (Meth)acrylmonomeren in Gegenwart zuvor hergestellter Polyurethandispersionen. Nach Abschluß der Polymerisation können aus den erhaltenen Dispersionen wäßrige Basislacke hergestellt werden.

Die EP-A-0 353 797 beschreibt die Herstellung eines hydroxyfunktionellen Polyurethanharzes in einem ungesättigten Monomer als Lösungsmittel, wobei das ungesättigte Monomer gegenüber Isocyanat reaktiv sein kann. Nach Überführung der Polyurethanlösung in die wäßrige Phase wird eine Emulsionspolymerisation durchgeführt. Die erhaltene Hybridpolymer-Dispersion kann als Wasserbasislackbindemittel verwendet werden.

In der EP-A-0 401 565 werden Wasserbasislacke beschrieben, deren Bindemittel hergestellt werden durch Emulsionspolymerisation von unter Zusatz externer Emulgatoren hergestellten wäßrigen Emulsionen von in ungesättigten Monomeren gelösten ungesättigt funktionalisierten Polyurethanmakromonomeren.

In den EP-A-0 424 705, EP-A-0 521 928, EP-A 0 522 419, EP-A-0 522 420, EP-A-0 662 992 und WO 95/14721 werden Wasserbasislacke beschrieben, die auf Polyurethan/Poly(meth)acrylat-Polymerhybriden basieren, wobei die Polymerhybride synthetisiert worden sind durch Pfropf- bzw. Blockpolymerisation ungesättigter Monomerer mit ungesättigt funktionalisierten Polyurethanmakromeren. Dabei können die ungesättigten Gruppen der Polyurethanmakromeren lateral oder terminal angeordnet sein. Das ungesättigte Polyurethanmakromere kann in organischem Lösungsmittel gelöst, beispielsweise im ungesättigten Monomeren selbst oder in Abwesenheit von Lösemitteln hergestellt worden sein. Die Copolymerisation kann in wäßriger oder nichtwäßriger Phase, also vor oder nach Überführung in die wäßrige Dispersion erfolgen.

Aus WO 95 28 429 sind als Bindemittel für Wasserbasislacke geeignete wäßrige Polyurethandispersionen bekannt, die auf durch ionische und/oder hydrophile Gruppen stabilisierten und über Siloxanbrücken kettenverlängerten Polyurethanharzen basieren.

Aus WO 95 28 428 ist ein Verfahren zur Herstellung einer Mehrschichtlackierung unter Verwendung eines selbstvernetzenden Wasserbasislacks bekannt, der als Bindemittel eine wäßrige Polyurethanharzdispersion auf der Basis eines Polyurethanharzes mit lateralen und/oder terminalen an Silizium gebundenen Hydroxyl- und/oder R'O-Gruppen enthält.

Auf der Basis der bekannten Polyurethan/Poly(meth)acrylat-Hybridbindemittel formulierte wäßrige Überzugsmittel, insbesondere Wasserbasislacke, sowie die aus WO 95 28 428 und WO 95 28 429 bekannten Wasserbasislacke sind verbesserungsbedürftig hinsichtlich ihrer Ablaufgrenze, d.h. sie sind in nur begrenzter Schichtdicke applizierbar, wenn Läufer vermieden werden sollen.

Insbesondere bei Farbtönen mit geringer Deckfähigkeit erfordert dies einen Auftrag in mehreren Spritzgängen mit Zwischentrocknung bzw. Zwischenablüften.

Aufgabe der vorliegenden Erfindung ist die Bereitstellung neuer wäßriger Überzugsmittel, insbesondere Wasserbasislacke, die die Herstellung von Lackschichten innerhalb einer Mehrschichtlackierung mit erhöhter Läufergrenze erlauben. Insbesondere sollen die Wasserbasislacke auch im Falle von Farbtönen mit geringer Deckfähigkeit in nur einem Spritzgang applizierbar sein.

Die Aufgabe wird gelöst durch Bereitstellung wäßriger Überzugsmittel, die Bindemitteldispersionen enthalten auf Basis von Polyurethan/Polymerisat-Polymerhybriden mit einem Zahlenmittel der Molmasse (Mn) von 8000 bis 1500000, einem Gewichtsverhältnis von Polyurethan- zu Polymerisatanteil von 0,05 : 1 bis 50 : 1, bevorzugt bis zu 5 : 1, einer Hydroxylzahl von 0 bis 150, bevorzugt unter 100 mg KOH/g, bezogen auf Festharz, wobei an Silizium gebundene Hydroxylgruppen bei der Berechnung der OH-Zahl nicht mitgezählt werden, und einer Säurezahl von 1,5 bis 40 mg KOH/g, bevorzugt 3 bis 20 mg KOH/g, bezogen auf Festharz, und einem Gehalt von 0,5 bis 150 mmol, bevorzugt 1 bis 100 mmol, besonders bevorzugt 5 bis 75 mmol Silizium pro 100 g Festharz in Form von in den Polyurethanteil eingebundenen Siloxanbrücken (-Si-O-Si-) und/oder in Form von an den Polyurethanteil gebundenen Silanolgruppen.

Die erfindungsgemäßen wäßrigen Überzugsmittel basieren auf einem oder mehreren Bindemitteln, sowie gegebenenfalls Vernetzern, Pigmenten und/oder Füllstoffen, lacktechnischen üblichen Additiven und/oder Lösemitteln.

Die Hybridpolymere sind lineare Blockpolymere oder sie besitzen einen verzweigten Aufbau, beispielsweise als Kammpolymer, oder sie liegen in Form von Mikrogelen vor. Bei den beim Aufbau des Polymerisatanteils des Polyurethan/Polymerisat-Polymerhybriden zur Polymerisation gelangenden olefinischen Doppelbindungen handelt es sich um allylische und/oder vinylische Doppelbindungen und/oder um alpha, beta-ungesättigte Carbonylgruppen, beispielsweise bevorzugt (meth)acrylische Doppelbindungen. Dabei beträgt der Anteil allylischer Doppelbindungen bevorzugt unter 10 %, während es sich bevorzugt zu mindestens 50 %, bevorzugt zu mehr als 70 % um (Meth)acryloylgruppen handelt. Sind mehr als 50 % der an der Polymerisation beteiligten olefinischen Doppelbindungen (Meth)acryloylgruppen, so handelt es sich bei den Hybridpolymeren um Polyurethan/Poly(meth)acrylat-Polymerhybride.

Die in den erfindungsgemäßen wäßrigen Überzugsmitteln eingesetzte Bindemitteldispersion auf der Basis von Polyurethan/Polymerisat-Polymerhybriden weist eine auf Festharz bezogene Säurezahl von 1,5 bis 40 mg KOH/g, bevorzugt 3 bis 20 mg KOH/g auf. Bevorzugt sind die Säuregruppen zu mindestens 80 %, bevorzugt ausschließlich Bestandteil des Polyurethananteils. Die Säuregruppen dienen der Stabilisierung der Polymerhybridteilchen in der wäßrigen Phase. Die Polyurethan/Polymerisat-Polymerhybriden können zusätzliche stabilisierende hydrophile nichtionische Gruppen enthalten, beispielsweise Polyalkylenoxidgruppen.

Die in den erfindungsgemäßen wäßrigen Überzugsmitteln eingesetzte Bindemitteldispersion auf der Basis von Polyurethan/Polymerisat-Polymerhybriden weist eine auf Festharz bezogene Hydroxylzahl von 0 bis 150, bevorzugt unter 100 mg KOH/g auf. Eine eventuelle Hydroxylzahl des Bindemittels kann aus dessen Polyurethananteil und/oder aus dessen Polymerisatanteil herrühren.

Die in den erfindungsgemäßen wäßrigen Überzugsmitteln einsetzbaren wäßrigen Bindemitteldispersionen basieren auf Hybridpolymeren, die herstellbar sind durch radikalische Copolymerisation von Siloxanbrücken und/oder Silanolgruppen, sowie olefinische Doppelbindungen enthaltenden Polyurethanharzen mit olefinisch ungesättigten Monomeren.

Die wäßrigen Bindemitteldispersionen auf der Basis von Polyurethan/Polymerisat-Polymerhybriden können beispielsweise hergestellt werden, indem man ein Säuregruppen enthaltendes Polyurethan-Prepolymer, das durchschnittlich 0,1 bis 2 einer radikalischen Copolymerisation zugängliche olefinische ungesättigte Gruppen pro Molekül und durchschnittlich 0,7 bis 9 an Silizium gebundene R'O-Gruppen pro Molekül aufweist, worin
- R' =: C1- bis C8-Alkyl oder C(O)R"', und
- R"' =: C1- bis C10-Alkyl
bedeuten, und das in einem gegenüber Isocyanat inerten Lösemittel gelöst vorliegen kann, gegebenenfalls nach vorheriger Neutralisation der Säuregruppen durch Zusatz von Wasser in eine wäßrige Dispersion überführt und danach gemeinsam mit olefinisch ungesättigten Monomeren einer radikalischen Polymerisation unterwirft. Dabei können die olefinisch ungesättigten Monomeren vor und/oder nach Herstellung der wäßrigen Dispersion zugesetzt werden. Beispielsweise können die oder ein Teil der olefinisch ungesättigten Monomeren vor der Herstellung der wäßrigen Dispersion die Funktion eines gegenüber Isocyanat inerten Lösemittels übernehmen, welches nicht wieder entfernt werden muß.

Die Herstellung der Polyurethan-Prepolymeren mit durchschnittlich 0,7 bis 9 bevorzugt an laterales und/oder terminales Silizium gebundenen R'O-Gruppen pro Molekül und durchschnittlich 0,1 bis 2 lateralen und/oder terminalen einer radikalischen Copolymerisation zugänglichen olefinisch ungesättigten Gruppen pro Molekül kann beispielsweise erfolgen durch Herstellung eines linearen oder verzweigten, nicht gelierten, von olefinischen Doppelbindungen freien, Säuregruppen enthaltenden sowie hydroxyfunktionellen Polyurethan-Prepolymeren in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren, Umsetzung der Hydroxylgruppen des so erhaltenen Polyurethan-Prepolymeren mit einem oder mehreren Silanen der allgemeinen Formel

((OCN-)ₙR)ₐSi(OR')_{b}(R'')_{c}

- mit R =: ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen, R' = C1 bis C8-Alkyl oder C(O)R"', bevorzugt C1 bis C4-Akyl, R" = R"' = C1- bis C10-Alkyl, wobei R'' und R"' gleich oder verschieden sein können, a = 1,2 oder 3, bevorzugt 1, b = 1,2 oder 3, bevorzugt 2 oder 3, c = 0,1 oder 2, n = 1 bis 3, bevorzugt 1 oder 2, besonders bevorzugt 1, wobei mehrere Reste R', R" und R"' gleich oder verschieden sind und worin die Summe aus a plus b plus c vier ergibt,
und mit einem oder mehreren Isocyanatgruppen aufweisenden olefinisch ungesättigten Monomeren.

Bevorzugt erfolgt die Herstellung der Polyurethan-Prepolymeren mit durchschnittlich 0,7 bis 9 bevorzugt an laterales und/oder terminales Silizium gebundenen R'O-Gruppen pro Molekül und durchschnittlich 0,1 bis 2 lateralen und/oder terminalen einer radikalischen Copolymerisation zugänglichen olefinisch ungesättigten Gruppen pro Molekül beispielsweise durch:
1) Herstellung eines linearen oder verzweigten, nicht gelierten, von olefinischen Doppelbindungen freien, Säuregruppen enthaltenden sowie isocyanatfunktionellen Polyurethan-Prepolymeren in einem inerten organischen Lösemittel(gemisch) und/oder in einem oder mehreren im Gemisch vorliegenden gegenüber Isocyanat inerten olefinisch ungesättigten Monomeren oder in Abwesenheit von Lösemitteln und olefinisch ungesättigten Monomeren,
2) Umsetzung der freien Isocyanatgruppen des so erhaltenen Polyurethan-Prepolymeren

a1) mit einer oder mehreren Verbindungen der allgemeinen Formel

   ((H-X-)ₙR)ₐSi(OR')_{b}(R'')_{c} (I)

   mit X = O,S,NH oder NR'^{v}, bevorzugt NH oder NR'^{v},
   R = ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen,
      R' = C1 bis C8-Alkyl oder C(O)R"', bevorzugt C1 bis C4-Alkyl,
      R'' = R"' = C1- bis C10-Alkyl, wobei R" und R"' gleich oder verschieden sein können,
      R'^{v} = C1- bis C8-Alkyl,
      a = 1,2 oder 3, bevorzugt 1,
      b = 1,2 oder 3, bevorzugt 2 oder 3,
      c = 0,1 oder 2,
      n = 1 bis 3, bevorzugt 1 oder 2, besonders bevorzugt 1,
   wobei mehrere Reste R', R'' und R"' gleich oder verschieden sind und worin die Summe aus a plus b plus c vier ergibt,
a2) mit einem oder mehreren zur Addition an Isocyanatgruppen befähigten, olefinisch ungesättigten Monomeren,
a3) gegebenenfalls mit einem oder mehreren NH₂- und/oder NH-Gruppen tragenden Alkanolaminen mit einer OH-Funktionalität von mindestens 1, und
a4) gegebenenfalls mit einem oder mehreren aliphatischen C4-C36-Alkoholen und/oder -Aminen.

Die Herstellung des R'OSi-funktionalisierten und durchschnittlich 0,1 bis 2 olefinische Doppelbindungen pro Molekül enthaltenden Polyurethan-Prepolymeren über NCO-Prepolymere kann in einem sogenannten Einstufenverfahren durchgeführt werden, d.h. die vorstehend beschriebenen Verfahrensschritte 1) und 2) können simultan durchgeführt werden, indem die dort benötigten Edukte gleichzeitig miteinander umgesetzt werden oder bevorzugt im sequentiellen Herstellungsverfahren. Bei der Auswahl der Reaktionspartner, der Reaktionsbedingungen und der Reihenfolge der Zugabe der einzelnen Reaktionspartner ist darauf zu achten, daß unerwünschte Nebenreaktionen ausgeschlossen werden.

Die beispielsweise im Verfahrensschritt 1) erfolgende Herstellung des linearen oder verzweigten, nicht gelierten, von olefinischen Doppelbindungen freien, Säuregruppen enthaltenden sowie isocyanatfunktionellen Polyurethan-Prepolymeren kann beispielsweise erfolgen durch Umsetzung von einer oder mehreren Verbindungen mit mindestens zwei gegenüber Isocyanat reaktiven Gruppen, insbesondere einem oder mehreren Polyolen, bevorzugt Diolen, mit einem oder mehreren organischen Polyisocyanaten, bevorzugt Diisocyanaten und mit einer oder mehreren Verbindungen mit mehr als einer, bevorzugt zwei gegenüber Isocyanatgruppen reaktiven Gruppen und mindestens einer Säuregruppe.

Beispielsweise kann ein als Ausgangsprodukt verwendbares, NCO-Gruppen enthaltendes Polyurethan-Prepolymer hergestellt weden durch Umsetzung in wasserfreiem Milieu von
b1) mindestens einer linearen oder verzweigten Verbindung, die mindestens zwei gegenüber Isocyanat reaktive Gruppen trägt mit einem mittleren Molekulargewicht von 60 - 10000, bevorzugt 60 - 6000,
b2) mindestens einem organischen Polyisocyanat, insbesondere Diisocyanat,
b3) mindestens einer Verbindung mit mehr als einer mit Isocyanat reaktiven Gruppen, und mindestens einer Säuregruppe, mit einer zahlenmittleren Molmasse (Mn) bis zu 10000, bevorzugt bis zu 2000
   in einem NCO/OH-Verhältnis von über 1 bis 4:1.

Bevorzugt handelt es sich bei der vorstehend genannten linearen oder verzweigten Verbindung der Komponente bl) um mindestens ein Polyol auf der Basis eines oder mehrerer Polyether, Polyester und/oder Polycarbonate, mit mindestens zwei OH-Gruppen im Molekül und einem Zahlenmittel der Molmasse (Mn) von 600 - 10000, bevorzugt über 1000 und unter 5000, gegebenenfalls unter Mitverwendung von einem oder mehreren zumindest difunktionellen niedermolekularen Alkoholen und/oder Aminen und/oder Aminoalkoholen mit einer Molmasse unter 600, bevorzugt unter 400.

Alle Herstellungsverfahren für NCO-Gruppen enthaltende Polyurethan-Prepolymere können als Ein- oder Mehrstufenverfahren durchgeführt werden.

Das Isocyanatgruppen enthaltende Polyurethan-Prepolymere weist bevorzugt einen Gehalt von Urethan-(-NHCOO-) und gegebenenfalls Harnstoff-(-NHCONH-) Gruppen zwischen 10 und 300 Milliequivalente pro 100 g Festharz auf.

Die zur Herstellung des NCO-Gruppen enthaltenden Polyurethan-Prepolymeren als Komponente bl) eingesetzten Verbindungen können beispielsweise eine lineare oder verzweigte Polyolkomponente, z.B. Diole sein. Es handelt sich beispielsweise um dem Fachmann geläufige Polyole, die auf dem Gebiet der Polyurethan-Chemie eingesetzt werden. Geht man von einer linearen Diolkomponente aus, können zum Erzielen einer Verzweigung des Polymeren Anteile an Polyolen mit einer Funktionalität von 3 oder mehr zugesetzt werden. Dabei ist die Menge so zu wählen, daß keine Gelbildung bei der Synthese des NCO-Gruppen enthaltenden Polyurethan-Prepolymeren auftritt.

Beispiele für die Polyolkomponente bl) können Polyetherpolyole, insbesondere Polyetherdiole, beispielsweise Polethylenglykole, Polypropylenglykole oder Polytetrahydrofurandiole sein.

Als weitere Beispiele für Polyolkomponenten bl) können Polyesterpolyole genannt werden. Man kann die Polyesterpolyole z.B. durch Veresterung von organischen Dicarbonsäuren oder ihren Anhydriden mit organischen Polyolen herstellen. Die Dicarbonsäuren und die Polyole können aliphatische, cycloaliphatische oder aromatische Dicarbonsäuren und Polyole sein. Die Polyester besitzen vorzugsweise ein Molekulargewicht von 300 bis 6000, eine OH-Zahl von 20 bis 400 und eine Säurezahl von kleiner 3, bevorzugt kleiner 1. Bevorzugt werden lineare Polyester, also Polyesterdiole eingesetzt.

Als Komponente bl) können z.B. auch Polycarbonatdiole eingesetzt werden.

Ferner lassen sich auch Polyesterpolyole, bevorzugt -diole, die sich von Lactonen ableiten, als Komponente b1) benutzen.

Bei den in b1) gegebenenfalls mitverwendbaren niedermolekularen Verbindungen handelt es sich besonders um Alkohole und Amine. Es sind die aus der Polyurethanchemie an sich bekannten im Sinne einer Isocyanat-Additionsreaktion mindestens difunktionellen Hydroxyl- und/oder Aminogruppen aufweisenden Verbindungen eines unter 600, bevorzugt unter 300 liegenden Molekulargewichts. Es kommen sowohl im Sinne der Isocyanatadditionsreaktion difunktionelle Verbindungen als auch mindestens trifunktionelle bzw. beliebige Gemische derartiger Verbindungen in Betracht.

Als Komponente b2) können beliebige organische Polyisocyanate, wie z.B. Diisocyanate eingesetzt werden. Es können aliphatische, cycloaliphatische, aromatische oder araliphatische Diisocyanate eingesetzt werden. Beispiele für geeignete Diisocyanate sind Hexamethylendiisocyanat, Isophorondiisocyanat, Bis-(4-isocyanatocyclohexyl)methan, Bis-(4-isocyanatophenyl)-methan, Tetramethylxylylendiisocyanat und 1,4-Cyclohexylendiisocyanat.

Als Komponente b3) können bevorzugt niedermolekulare Verbindungen verwendet werden, die mehr als eine, bevorzugt zwei oder mindestens zwei mit Isocyanatgruppen reagierende Gruppen und mindestens eine Säuregruppe enthalten. Geeignete mit Isocyanatgruppen reagierende Gruppen sind insbesondere Hydroxylgruppen und primäre und sekundäre Aminogruppen. Als Säuregruppen kommen z.B. Carboxyl-, Phosphorsäure- und Sulfonsäuregruppen in Betracht. Die bevorzugt einzuführenden Säuregruppen sind Carboxylgruppen; sie können beispielsweise durch Verwendung von Hydroxyalkancarbonsäuren als Komponente b3) eingeführt werden. Bevorzugt sind Dihydroxyalkansäuren, insbesondere alpha,alpha-Dimethylolalkansäuren wie alpha,alpha-Dimethylolpropionsäure.

Aminogruppenhaltige Säuren, die verwendbar sind, sind beispielsweise alpha,alpha-Diamino-valeriansäure, 3,4-Diaminobenzoesäure, 2,4-Diamino-toluol-sulfonsäure-(5) und 4,4-Diamino-di-phenylethersulfonsäure.

Als Komponente b3) können auch saure Polyester wie sie in der DE-A-39 03 804 beschrieben sind, eingesetzt werden.

Die Mengen an b1), b2) und b3) werden so gewählt, daß bei der Umsetzung ein Umsetzungsprodukt mit lateralen und/oder terminalen NCO-Gruppen entsteht, d.h. es wird mit einem Polyisocyanatüberschuß gearbeitet. Man kann mit einem NCO- zu OH-Verhältnis von über 1 bis 4 : 1 arbeiten, bevorzugt ist der Bereich von 1,1 bis 2 : 1, besonders bevorzugt von 1,1 bis 1,7 : 1. Das Umsetzungsprodukt kann verzweigt aufgebaut sein, bevorzugt ist es im allgemeinen aber linear aufgebaut mit terminalen NCO-Gruppen.

Das in Verfahrensschritt 1) erhaltene NCO-Gruppen enthaltende Polyurethan-Prepolymer wird in Verfahrensschritt 2)
a1) mit einer oder mehreren Verbindungen der allgemeinen Formel

   ((H-X-)ₙR)ₐSi(OR')_{b}(R")_{c} (I)

   mit X = O,S,NH oder NR'^{v}, bevorzugt NH oder NR'^{v},
   R = bifunktioneller bis tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen,
      R' = C1- bis C8-Alkyl oder C(O)R"', bevorzugt C1- bis C4-Alkyl,
      R'' = R"' = C1- bis C10-Alkyl,
      R'^{v} = C1- bis C8-Alkyl,
      a = 1,2 oder 3, bevorzugt 1,
      b = 1,2 oder 3, bevorzugt 2 oder 3,
      c = 0,1 oder 2,
      n = 1 bis 3, bevorzugt 1 oder 2, besonders bevorzugt 1
   und worin die Simme aus a plus b plus c vier ergibt,
a2) mit einem oder mehreren zur Addition an Isocyanatgruppen befähigten, olefinisch ungesättigten Monomeren,
a3) gegebenenfalls mit einem oder mehreren NH₂- und/oder NH-Gruppen tragenden Alkanolaminen mit einer OH-Funktionalität von mindestens 1, und
a4) gegebenenfalls mit einem oder mehreren aliphatischen C4-C36-Alkoholen und/oder -Aminen
zu einem Säuregruppen enthaltenden, R'OSi-funktionalisierten und olefinische Doppelbindungen enthaltenden Polyurethan-Prepolymeren umgesetzt.

Bei den Verbindungen der allgemeinen Formel (I) handelt es sich um Silanderivate, die gegenüber Isocyanatgruppen zur Addition befähigte, aktiven Wasserstoff enthaltende Gruppen vom Typ (H-X-)ₙR- aufweisen. Als aktiven Wasserstoff enthaltende, funktionelle Gruppen HX- sind Aminogruppen bevorzugt. n besitzt Werte von 1 bis 3, bevorzugt nimmt n den Wert 1 an. Beim Rest R handelt es sich um einen bifunktionellen bis tetrafunktionellen, bevorzugt bifunktionellen organischen Rest, der chemisch inerte Gruppen oder Substituenten tragen kann, mit einem Molekulargewicht von 13 bis 500. Bevorzugt handelt es sich beim Rest R um einen bifunktionellen (Ar)alkylenrest mit 1 bis 12 C-Atomen. Ein Alkylenrest mit 1 bis 12 C-Atomen ist als Rest R besonders bevorzugt.

Weiterhin enthält das Silanderivat der allgemeinen Formel (I) 1 bis 3, bevorzugt 2 oder 3 an Silizium gebundene R'O-Gruppen, wobei R' bevorzugt die Bedeutung von C1- bis C8-Alkyl besitzt.

Als einige bevorzugte Beispiele für Verbindungen (I) seien beta-Aminoethyltriethoxysilan, gamma-Aminopropyltriethoxysilan, gamma-Aminopropyltrimethoxysilan, gamma-Aminopropylethyldiethoxysilan, gamma-Aminopropylphenyldiethoxysilan, gamma-Aminopropyltrimethoxysilan, delta-Aminobutyltriethoxysilan, delta-Aminobutylethyldiethoxysilan, N-(2-Aminoethyl-3-aminopropyl)trimethoxysilan, N-2-Aminoethyl-3-aminopropyl-tris(2-ethylhexoxy)silan, 6-(Aminohexylaminoproyl)trimethoxysilan, N-Aminoethyl-3-aminopropyl-methyldimethoxysilan genannt.

Bei den in Verfahrensschritt a2) eingesetzten, zur Addition an Isocyanatgrupppen befähigten, olefinisch ungesättigten Monomeren handelt es sich um Verbindungen mit aktivem Wasserstoff und mit bevorzugt nur einer copolymerisierbaren olefinischen Doppelbindung im Molekül. Aktiver Wasserstoff ist beispielsweise enthalten in Hydroxylgruppen, NH-Gruppen, NH₂-Gruppen oder Mercaptangruppen. Im Rahmen der vorliegenden Erfindung bevorzugt sind Verbindungen mit aktivem Wasserstoff in Form von Hydroxylgruppen, bevorzugt mit nur einer Hydroxylgruppe, und mit einer copolymerisierbaren olefinischen Doppelbindung im Molekül, insbesondere in Gestalt einer (Meth)acryloylgruppe. Beispiele für solche Verbindungen sind Allylalkohol, insbesondere aber Hydroxyalkyl(meth)acrylate, wie Hydroxyethyl(meth)acrylat, Hydroxypropyl(meth)acrylat oder Butandiolmono(meth)acrylat, Glyzerinmono(meth)acrylat, Addukte von (Meth)acrylsäure an Monoepoxide wie z.B. Versaticsäureglycidylester, Addukte von Glycidyl(meth)acrylat an Monocarbonsäuren wie z.B. Essigsäure oder Propionsäure.

Die Umsetzung des NCO-funktionellen Polyurethan-Prepolymeren zum R'OSi-funktionalisierten Polyurethan-Prepolymeren erfolgt unter vollständigem Verbrauch der HX-Gruppen der Verbindungen (I) sowie bevorzugt auch der gegenüber Isocyanat reaktiven Gruppen der olefinisch ungesättigten Monomeren.

Das der im erfindungsgemäßen wäßrigen Überzugsmittel einsetzbaren Bindemitteldispersion zugrundeliegende Polyurethan/Polymerisat-Hybridpolymere kann Hydroxylgruppen besitzen. Ist dieses gewünscht, so kann das NCO-Gruppen enthaltende Polyurethan-Prepolymer bei der Herstellung des R'OSi- und ungesättigt funktionalisierten Polyurethan-Prepolymeren im Rahmen des optionalen Verfahrensschrittes a3) mit mindestens einem NH₂- und/oder NH-Gruppen tragenden Alkanolamin mit einer OH-Funktionalität von mindestens 1 umgesetzt werden. Die Umsetzung erfolgt dann unter vollständigem Verbrauch der NH₂- und/oder NH-Gruppen des Alkanolamins.

Bei den NH₂- und/oder NH-Gruppen tragenden Alkanolaminen mit einer OH-Funktionalität von mindestens 1 handelt es sich um Verbindungen, die als Lieferanten für Hydroxylgruppen in der Bindemitteldispersion dienen können und allein oder gemeinsam mit eventuellen Hydroxylgruppen aus dem Poly(meth)acrylatanteil zur Hydroxylzahl des Bindemittels beitragen. Die NH- oder NH₂-Gruppen der Alkanolamine weisen gegenüber den Isocanatgruppen des NCO-funktionellen PU-Prepolymeren eine im Vergleich zu ihren OH-Gruppen deutlich höhere Reaktivität auf, d.h. bevorzugt reagieren die NH-Gruppen mit den Isocyanatgruppen unter Harnstoffbildung.

Beispiele für geeignete Alkanolamine mit einer OH-Funktionalität von mindestens 1 sind Monoalkanolamine und Dialkanolamine, z.B. Diethanolamin, N-Methylethanolamin, Diisopropanolamin, N-Ethylisopropanolamin, Monoisopropanolamin, Ethanolamin, 2,2-Aminoethoxyethanol, Monoethylethanolamin, Butylethanolamin, Cyclohexylethanolamin, 3-Aminopropanol, 2-Aminobutanol-1.

Es kann zweckmäßig sein, wenn anstelle der oder gemeinsam mit den NH₂- und/oder NH-Gruppen tragenden Alkanolaminen im optionalen Verfahrensschritt a4) auch ein oder mehrere aliphatische C4-C36-Alkohole und/oder -Amine eingesetzt werden, deren Umsetzung dann in der Regel unter vollständigem Verbrauch ihrer OH-, NH-und/oder NH₂-Gruppen erfolgt. Fettamine und/oder Fettalkohole mit mehr als 12 C-Atomen sind bevorzugt. Beispiele sind Laurylalkohol, Stearylalkohol sowie die entsprechenden Amine.

Die Isocyanatgruppen des NCO-funktionellen Polyurethan-Prepolymeren werden mit den HX-Gruppen von (I), den gegenüber Isocyanat reaktiven Gruppen der olefinisch ungesättigten Monomeren, den NH-Gruppen des gegebenenfalls eingesetzten Alkanolamins und den gegenüber Isocyanat reaktiven Gruppen des gegebenenfalls eingesetzten C4-C36-Alkohols und/oder -Amins bevorzugt im stöchiometrischen Verhältnis zur Reaktion gebracht. Dabei können Alkanolamin, C4-C36-Alkohol und/oder -Amin, das gegenüber Isocyanat reaktive olefinisch ungesättigte Monomere und die Verbindung (I) in Mischung oder nacheinander in geeigneter Reihenfolge mit dem NCO-funktionellen Polyurethan-Prepolymer umgesetzt werden.

Im so erhaltenen Polyurethan-Prepolymeren mit durchschnittlich 0,7 bis 9 an Silizium gebundenen R'O-Gruppen pro Molekül und durchschnittlich 0,1 bis 2 einer radikalischen Copolymerisation zugänglichen olefinisch ungesättigten Gruppen pro Molekül gegebenenfalls noch verbliebene restliche freie Isocyanatgruppen können vor der Überführung des Prepolymeren in die Wasserphase mit den üblichen gegenüber Isocyanat zur Addition befähigten, aktiven Wasserstoff enthaltenden Verbindungen umgesetzt werden. Beispiele für geeignete aktiven Wasserstoff enthaltende Verbindungen sind Monoalkohole, Diole, Glykolether, Monoamine, Diamine.

Die Umsetzung der zum Aufbau des NCO-funktionellen Polyurethan-Prepolymeren eingesetzten Komponenten als auch die weitere Umsetzung zum R'OSi-funktionalisierten Polyurethan-Prepolymeren erfolgen im wasserfreien Milieu beispielsweise bei Temperaturen von 20 bis 140°C, bevorzugt zwischen 50 und 100°C. Es kann lösemittelfrei gearbeitet werden oder es wird in dem Fachmann an sich geläufigen für die Polyurethansynthese geeigneten organischen Lösemitteln gearbeitet. Als Lösemittel können wassermischbare Lösemittel oder wasserunmischbare Lösemittel eingesetzt werden. Im allgemeinen ist es vorteilhaft, solche Lösemittel zu verwenden, die in jedem Stadium der Herstellung der wäßrigen Bindemitteldispersion (beispielsweise nach deren Fertigstellung) entfernt werden können, beispielsweise durch Abdestillieren gegebenenfalls unter vermindertem Druck.

Beispiele für geeignete Lösemittel sind Ketone, z.B. Aceton, Methylethylketon, Methylisobutylketon; N-Alkylpyrrolidone, wie z.B. N-Methylpyrrolidon; Ether, wie z.B. Diethylenglykoldimethylether, Dipropylenglykoldimethylether, oder auch cyclische Harnstoffderivate, wie 1,3-Di-methyl-3,4,5,6-tetrahydro-2(1H)-pyrimidinon.

Das so erhaltene Polyurethan-Prepolymere mit durchschnittlich 0,7 bis 9 an Silizium gebundenen R'O-Gruppen pro Molekül und durchschnittlich 0,1 bis 2 einer radikalischen Copolymerisation zugänglichen olefinisch ungesättigten Gruppen pro Molekül wird durch Zusatz von Wasser in eine wäßrige Dispersion überführt, bevorzugt nach Neutralisation seiner Säuregruppen. Die Säuregruppen können mit einem Neutralisationsmittel vollständig oder teilweise in die entsprechenden Salzgruppen überführt werden. Dies kann in allen Stadien der vorstehend beschriebenen Synthese geschehen, wobei zu beachten ist, daß die Auswahl der zur Salzbildung eingesetzten Verbindungen so getroffen wird, daß diese sich während der Synthese chemisch inert verhalten.

Zur Neutralisation dienen Basen, z.B. Amine, bevorzugt tertiäre Amine. Beispiele für geeignete Basen sind Ammoniak oder organische Amine wie 2-Amino-2-methylpropanol-1, Trialkylamine, wie Trimethylamin, Triethylamin, Triisopropylamin; N-Alkylmorpholine, wie N-Methylmorpholin; N-Dialkylalkanolamine, wie N-Dimethylethanolamin und N-Dimethylisopropanolamin und deren Mischungen.

Die Überführung in die wäßrige Dispersion kann so erfolgen, daß das Polyurethan-Prepolymer mit Wasser vermischt wird. Dazu kann die gesamte Wassermenge auf einmal oder bevorzugt zunächst nur ein Teil der gesamten Wassermenge mit dem Polyurethan-Prepolymer vermischt werden. Das Wasser kann zum Harz gegeben werden. Ebenso möglich ist die Zugabe des Harzes zum Wasser.

Die R'OSi-Gruppen des Polyurethan-Prepolymeren sind hydrolyseempfindlich. Über den Verlauf der Wasserzugabe können unterschiedliche Produkte erhalten werden. Beispielsweise kann gesteuert werden, ob das Hybridbindemittel Silizium in Form von in den Polyurethanteil eingebundenen Siloxanbrücken (-Si-O-Si-) oder in Form von an den Polyurethanteil gebundenen Silanolgruppen enthält bzw. wie das Verhältnis von Siloxanbrücken zu Silanolgruppen liegt.

Soll das Hybridpolymere Silizium in Form von Silanolgruppen, beispielsweise im wesentlichen nur in Form von Silanolgruppen enthalten, so ist es wesentlich, daß innerhalb kurzer Zeit eine solche Menge an Wasser zugegeben wird, die ausreichend ist, eine weitere Reaktion der durch Hydrolyse gebildeten Silanolgruppen zu verhindern. Die Wasserzugabe erfolgt in mehr als zehnfachem stöchiometrischen Überschuß der zur Hydrolyse der R'OSi-Gruppen notwendigen Wassermenge.

Bevorzugt wird der mindestens 50-fache stöchiometrische Uberschuß zugesetzt. Besonders bevorzugt erfolgt der Wasserzusatz in einer solchen Menge, daß mindestens die Hälfte der zur Herstellung der wäßrigen Dispersion benötigten Wassermenge auf einmal zugesetzt wird. Durch Zusatz der ausreichenden Wassermenge wird eine unter Wasserabspaltung verlaufende Kondensation der durch Hydrolyse gebildeten Silanolgruppen zu Siloxanbrücken weitestgehend vermieden, d.h. man erhält eine wäßrige Dispersion eines Polyurethanharzes, das praktisch frei ist von Siloxanbrücken und das Silanolgruppen enthält.

Bevorzugt jedoch wird das Polyurethan-Prepolymer einer Kettenverlängerung unter Siloxanbrückenbildung unterzogen, indem man eine geringe zur Überführung in die wäßrige Phase nicht ausreichende Menge an Wasser, beispielsweise bevorzugt in mindestens stöchiometrischer Menge zur Hydrolyse der R'OSi-Gruppen zusetzt und das Reaktionsprodukt während oder nach der Kettenverlängerung gegebenenfalls nach vollständiger oder teilweiser Neutralisation in eine wäßrige Dispersion überführt. Die Kettenverlängerung des R'OSi-funktionalisierten Polyurethan-Prepolymeren erfolgt nach Zugabe eines bevorzugt bis zu maximal zehnfachen stöchiometrischen Überschusses, besonders bevorzugt bis zu maximal fünffachen stöchiometrischen Überschusses, berechnet auf die zur Hydrolyse der R'OSi-Gruppen notwendige Wassermenge. Die Hydrolyse der R'OSi-Gruppen läuft schnell ab. Die durch Hydrolyse gebildeten Silanolgruppen kondensieren unter Wasserabspaltung zu Siloxanbrücken und führen damit zu einem kettenverlängerten Polyurethanharz, das praktisch frei ist von Silanolgruppen, beispielsweise liegen über 80%, insbesondere über 90% des Siliziums als Siloxanbrücken gebunden vor. Abhängig vom eingesetzen R'OSi-funktionalisierten Polyurethan-Prepolymeren werden dabei lineare, verzweigte oder vernetzte Produkte gewonnen.

Die Überführung des gegebenenfalls neutralisierten Reaktionsprodukts in eine wäßrige Dispersion unter Zusatz einer ausreichenden Wassermenge kann während oder nach der Kettenverlängerung erfolgen und die Ausbildung der Siloxanbrücken erfolgt in der dispergierten oder nicht-dispergierten Harzphase, d.h. die Kettenverlängerung läuft in der Harzphase ab; wenn also das Harz bereits durch Zugabe einer ausreichenden Wassermenge dispergiert ist, so läuft die Kettenverlängerung in den Dispersionsteilchen selbst ab.

Die Hydrolysereaktion sowie die damit gegebenenfalls verlaufende Kettenverlängerung kann, falls gewünscht, bei erhöhter Temperatur durchgeführt werden. Beispielsweise sind Temperaturen bis zu 95°C geeignet.

Die Herstellung der wäßrigen Dispersion des Siloxanbrücken und/oder Silanolgruppen aufweisenden Polyurethanharzes kann nach bekannten Verfahren erfolgen. Beispielsweise ist es möglich, die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer, gleichzeitig Harz, Wasser und Neutralisationsmittel homogen zusammengemischt. Die Überführung in die Wasserphase kann durch erhöhte Temperatur unterstützt werden.

Das lösemittelfrei oder in organischer Lösung vorliegende Polyurethanharz wird durch Zugabe ausreichender Wassermengen in die wäßrige Phase überführt. Die Zugabe der zur Überführung in die wäßrige Phase ausreichenden Wassermenge kann nach Abschluß der Kettenverlängerung erfolgen. Es ist auch möglich die Hauptwassermenge während der Kettenverlängerung bzw. nach der Hydrolyse der R'OSi-Gruppen zuzugeben. Es ergibt sich eine feinteilige Polyurethandispersion mit einer mittleren Teilchengröße von größer 10 und kleiner als 2000 nm, bevorzugt über 50 und unter 500 nm. Die Verteilung kann dabei monomodal oder bimodal, bevorzugt monomodal sein.

Nach Erstellung der wäßrigen Dispersion des Siloxanbrücken und/oder Silanolgruppen, bevorzugt im wesentlichen nur Siloxanbrücken aufweisenden Polyurethanharzes erfolgt die letzte Synthesestufe bei der Herstellung der Bindemitteldispersion. Dabei handelt es sich um den Aufbau des Polymerisatanteils des Polyurethan/Polymerisat-Polymerhybrid-Bindemittels durch radikalische Polymerisation nach an sich bekannten Methoden. Die Copolymerisation bzw. Pfropfpolymerisation der lateralen und/oder terminalen olefinischen Doppelbildungen des Polyurethanharzes erfolgt gemeinsam mit olefinisch ungesättigten Comonomeren. Bei den zur Polymerisation gelangenden olefinischen Doppelbindungen handelt es sich um allylische und/oder vinylische Doppelbildungen und/oder um alpha,betaungesättigte Carbonylgruppen, beispielsweise bevorzugt (meth)acrylische Doppelbindungen. Dabei beträgt der Anteil allylischer Doppelbindungen bevorzugt unter 10 %, während es sich bevorzugt zu mindestens 50 %, bevorzugt zu mehr als 70 % um (Meth)acryloylgruppen handelt. Die Comonomeren können als Teilmenge oder auch vollständig - wie vorstehend erwähnt in ihrer Funktion als Lösemittel während der Synthese des Polyurethanharzes - schon in der wäßrigen Dispersion vorliegen, oder sie werden bevorzugt zumindest als Teilmenge nach Erstellung der wäßrigen Dispersion zugesetzt und polymerisiert. Comonomere und Radikalinitiatoren können gemeinsam, beispielsweise als Mischung oder ineinander gelöst oder getrennt, beispielsweise auch zeitlich versetzt zugegeben werden. Es kann zweckmäßig sein, die Comonomeren- und Initiatorzugabe so durchzuführen, daß sich während der radikalischen Polymerisation keine Änderungen im Festkörpergehalt ergeben.

Die radikalische Polymerisation wird bei Temperaturen zwischen 20 und 95°C, bevorzugt zwischen 60 und 90°C, durchgeführt.

Beispiele für Radikalinitiatoren, die in üblichen Mengen eingesetzt werden können, sind Peroxidverbindungen wie Dialkylperoxide, Diacylperoxide, organische Hydroperoxide, Perester, Ketonperoxide; Azoverbindungen, wie Azobisisobutyronitril. Bevorzugt sind wasserlösliche Radikalinitiatoren wie beispielsweise Wasserstoffperoxid, Ammoniumperoxodisulfat, Ammoniumpersulfat, Ammoniumsalze der 4,4'-Azobis(4'-cyanpentansäure), 2,2'-Azobis(2-methyl-N-1,1-bis(hydroxymethyl)ethyl)propionamide, 2,2'Azobis(2-methyl-N-2-hydroxyethyl)propionamide.

Ebenfalls möglich ist es, die Polymerisation als Redoxpolymerisation durchzuführen unter Verwendung entsprechender Redoxinitiatorsysteme wie beispielsweise Natriumsulfit, Natriumdithionit, Ascorbinsäure und Peroxidverbindungen.

Als radikalisch polymerisierbare, olefinisch ungesättigte Comonomere dienen insbesondere solche, die keine funktionellen Gruppen tragen. Beispiele sind monovinylaromatische Verbindungen vorzugsweise mit 8 bis 10 Kohlenstoffatomen je Molekül, wie Styrol, Vinyltoluol; Vinylether und Vinylester, wie Vinylacetat, Vinylversatat; Malein-, Fumar-, Tetrahydrophthalsäuredialkylester, insbesondere aber (Cyclo)alkyl(meth)acrylate, wie Methyl(meth)acrylat, Ethyl(meth)acrylat, Propyl(meth)acrylat, Butyl(meth)acrylat, Hexyl(meth)acrylat, Cyclohexyl(meth)acrylat, Ethylhexyl(meth)acrylat, Dodecyl(meth)acrylat, Lauryl(meth)acrylat, Isobornyl(meth)acrylat.

Neben den nichtfunktionellen Monomeren können auch olefinisch ungesättigte Comonomere mit funktionellen Gruppen eingesetzt werden. Beispiele sind solche mit CH-aciden, Epoxid-, Hydroxy- oder Carboxylgruppen, wobei zu beachten ist, daß die carboxyfunktionellen Monomeren zu nicht mehr als 20 % der Säurezahl des Polyurethan/Polymerisat-Polymerhybrid-Bindemittels beitragen sollen.

Beispiele für Comonomere mit Hydroxylgruppen, die alleine oder gemeinsam mit eventuellen Hydroxylgruppen aus dem Polyurethananteil zur Hydroxylzahl des Bindemittels beitragen können, sind Allylalkohol, insbesondere aber Hydroxyalkyl(meth)acrylate, wie Hydroxyethyl(meth)acrylat, Hydroxypropyl(meth)acrylat oder Butandiolmono(meth)acrylat, Glyzerinmono(meth)acrylat, Addukte von (Meth)acrylsäure an Monoepoxide wie z.B. Versaticsäureglycidylester, Addukte von Glycidyl(meth)acrylat an Monocarbonsäuren wie z.B. Essigsäure oder Propionsäure.

Beispiele für carboxylgruppenhaltige Comonomere sind ungesättigte Carbonsäuren, wie z.B. (Meth)acryl-, Itacon-, Croton-, Isocroton-, Aconit-, Malein- und Fumarsäure, Halbester der Malein- und Fumarsäure.

Weiterhin können auch kleine Anteile von Comonomeren mit mindestens zwei polymerisierbaren, olefinischen Doppelbindungen eingesetzt werden. Bevorzugt liegt der Anteil dieser Monomeren unter 5 Gew.-%, bezogen auf das Gesamtgewicht der Comonomeren. Beispiele für derartige Verbindungen sind Divinylbenzol, Hexandioldi(meth)acrylat, Ethylenglykoldi(meth)acrylat, Butandioldi(meth)acrylat, Trimethylolpropantri(meth)acrylat und ähnliche Verbindungen.

Bei der Herstellung der wäßrigen Bindemitteldispersion werden die Mengenanteile der einzelnen Edukte bevorzugt so gewählt und die Reaktion so geführt, daß das der wäßrigen Bindemitteldispersion zugrundeliegende Polyurethan/Polymerisat-Hybridpolymere ein Zahlenmittel der Molmasse (Mn) von 8000 bis 1500000, ein Gewichtsverhältnis von Polyurethan- zu Polymerisatanteil von 0,05 : 1 bis 5 : 1, eine Hydroxylzahl von 0 bis 150, bevorzugt unter 100 mg KOH/g, bezogen auf Festharz, wobei an Silizium gebundene Hydroxylgruppen bei der Berechnung der OH-Zahl nicht mitgezählt werden, und eine Säurezahl von 1,5 bis 40 mg KOH/g, bevorzugt 3 bis 20 mg KOH/g, bezogen auf Festharz und einen Gehalt von 0,5 bis 150 mmol, bevorzugt 1 bis 100 mmol, besonders bevorzugt 5 bis 75 mmol Silizium pro 100 g Festharz in Form von in den Polyurethanteil eingebundenen Siloxanbrücken (-Si-O-Si-) und/oder in Form von an den Polyurethanteil gebundenen Silanolgruppen aufweist.

Der Festkörpergehalt der in den erfindungsgemäßen wäßrigen Überzugsmitteln eingesetzten Bindemitteldispersionen beträgt zwischen 25 und 65 Gew.-%, bevorzugt über 35 und unter 60 Gew.-%.

Gegebenenfalls in den wäßrigen Bindemitteldispersionen enthaltene Lösemittel können falls gewünscht durch Abdestillieren entfernt werden. Dies kann unter vermindertem Druck geschehen, beispielsweise vor oder nach der radikalischen Polymerisation.

Aus den wäßrigen Bindemitteldispersionen können die erfindungsgemäßen wäßrigen Überzugsmittel hergestellt werden. Bevorzugt handelt es sich dabei um Wasserbasislacke. Die erfindungsgemäßen wäßrigen Überzugsmittel können selbsttrocknend (physikalisch trocknend), selbstvernetzend oder fremdvernetzend sein. Die den wäßrigen Bindemitteldispersionen zugrundeliegenden Polyurethan/Polymerisat-Polymerhybride besitzen Hydroxylzahlen zwischen 0 und 150, bevorzugt zwischen 0 und 100 mg KOH/g. Dabei liegt die Hydroxylzahl bevorzugt dann im oberen Wertebereich, wenn fremdvernetzende wäßrige Überzugsmittel hergestellt werden sollen.

Zur Herstellung von wäßrigen Überzugsmitteln, bevorzugt Wasserbasislacken werden der wäßrigen Bindemitteldispersion beispielsweise Pigmente, weitere Bindemittel, Additive sowie gegebenenfalls geringe Mengen an Lösemitteln zugesetzt.

Die erfindungsgemäßen wäßrigen Überzugsmittel können neben der wäßrigen Bindemitteldispersion ein oder mehrere davon unterschiedliche zusätzliche Bindemittel enthalten. Beispiele für solche zusätzliche Bindemittel sind dem Fachmann geläufige übliche filmbildende wasserlösliche oder wasserverdünnbare Harze, wie wasserverdünnbare Polyesterharze, wasserverdünnbare Polyacrylatharze, wasserverdünnbare Polyurethanharze und/oder solche wasserverdünnbaren Bindemittel, in denen (Meth)acrylcopolymer und Polyurethanharz oder (Meth)acrylcopolymer und Polyesterharz kovalent oder in Form interpenetrierender Harzmoleküle verbunden vorliegen. Es kann sich um reaktive oder nicht-funktionelle Harze handeln. Die Menge der zugesetzten Harze kann 0 bis 75 Gew.-%, vorzugsweise 0 bis 50 Gew.-% des gesamten Harzfestkörpers betragen. Besonders bevorzugt sind 0 bis 30 Gew.-%. In diesem Zusammenhang bedeutet Harzfestkörper die Summe aller Bindemittel ohne einen Vernetzeranteil.

Zur Bereitung der erfindungsgemäßen wäßrigen Überzugsmittel können verschiedene Vernetzer, wie beispielsweise Formaldehyd-Kondensationsharze, wie Phenol-Formaldehyd-Kondensationsharze und Amin-Formaldehydkondensationsharze, sowie freie oder blockierte Polyisocyanate verwendet werden. Die Vernetzer können einzeln oder im Gemisch eingesetzt werden. Das Mischungsverhältnis Vernetzer zu Bindemittel beträgt bevorzugt 10 : 90 bis 40 : 60, besonders bevorzugt 20 : 80 bis 30 : 70, jeweils bezogen auf das Festkörpergewicht.

Weiterhin können die erfindungsgemäßen wäßrigen Überzugsmittel dem Fachmann bekannte Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die erfindungsgemäßen wäßrigen Überzugsmittel lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Katalysatoren, Antischaummittel, wie beispielsweise silikonhaltige Verbindungen; Netzmittel sowie haftvermittelnde Substanzen eingesetzt werden. Unter Netzmittel werden auch bekannte Pastenharze verstanden, die zum besseren Dispergieren und Vermahlen der Pigmente eingesetzt werden können.

Der Lösemittelanteil der erfindungsgemäßen wäßrigen Überzugsmittel beträgt bevorzugt unter 20 Gew.-%, besonders bevorzugt unter 15 Gew.-%, insbesondere bevorzugt unter 10 Gew.-%. Es handelt sich um übliche lacktechnische Lösemittel, diese können von der Herstellung der Bindemittel stammen oder werden separat zugegeben. Beispiele für solche Lösemittel sind ein- oder mehrwertige Alkohole, z.B: Propanol, Butanol, Hexanol; Glykolether oder -ester, z.B. Diethylenglykoldialkylether, Dipropylenglykoldialkylether, jeweils mit C1-6-Alkyl, Ethoxypropanol, Butylglykol; Glykole z.B. Ethylenglykol; Propylenglykol, und dessen Oligomere, N-Alkylpyrrolidone, wie z.B. N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe.

Die erfindungsgemäßen wäßrigen Überzugsmittel können ein oder mehrere anorganische und/oder organische farb- und/oder effektgebende Pigmente und gegebenenfalls zusätzlich mindestens einen Füllstoff enthalten.

Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente, Perylenpigmente.

Die Effektpigmente werden im allgemeinen in Form einer handelsüblichen wäßrigen oder nicht-wäßrigen Paste vorgelegt, gegebenenfalls mit bevorzugt wasserverdünnbaren, organischen Lösemitteln und Additiven versetzt und danach mit dem wäßrigen Bindemittel unter Scheren vermischt. Pulverförmige Effektpigmente können zunächst mit bevorzugt wasserverdünnbaren organischen Lösemitteln und Additiven zu einer Paste verarbeitet werden.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Ein Beispiel für ein im erfindungsgemäßen wäßrigen Überzugsmittel bevorzugt einsetzbares Pastenharz auf Polyurethanbasis findet sich in der DE-A-40 00 889. Das Anreiben kann in üblichen, dem Fachmann bekannten Aggregaten erfolgen. Danach wird mit dem restlichen Anteil des wäßrigen Bindemittels oder des wäßrigen Pastenharzes zur fertigen Farbpigmentanreibung komplettiert.

Sind im erfindungsgemäßen wäßrigen Überzugsmittel Pastenharze vorhanden, so addieren sich diese bei der Berechnung des Harzfestkörpers zu Bindemittel plus gegebenenfalls vorhandenem Vernetzer.

Das erfindungsgemäße wäßrige Überzugsmittel enthält Basen als Neutralisationsmittel, beispielsweise die gleichen wie schon vorstehend als Neutralisationsmittel für das Hybridbindemittel erwähnt.

Die erfindungsgemäßen wäßrigen Überzugsmittel werden bevorzugt als Wasserbasislacke formuliert, wie sie für Mehrschichtlackierungen eingesetzt und mit transparenten Klarlacken überlackiert werden. Ein solcher Wasserbasislack besitzt beispielsweise einen Festkörpergehalt von 10 - 50 Gew.-%, für Effektwasserbasislacke liegt er beispielsweise bevorzugt bei 15 - 30 Gew.-%, für unifarbige Wasserbasislacke liegt er bevorzugt höher, beispielsweise bei 20 - 45 Gew.-%. Das Verhältnis von Pigment (einschließlich Füllstoffe) zu Bindemittel plus gegebenenfalls Vernetzer plus gegebenenfalls Pastenharz im Wasserbasislack beträgt beispielsweise zwischen 0,03 : 1 bis 3 : 1, für Effektwasserbasislacke liegt es beispielsweise bevorzugt bei 0,06 : 1 bis 0,6 :1, für unifarbige Wasserbasislacke liegt es bevorzugt höher, beispielsweise bei 0,06 : 1 bis 2,5 : 1, jeweils bezogen auf das Festkörpergewicht.

Die erfindungsgemäßen Wasserbasislacke können nach üblichen Methoden appliziert werden. Bevorzugt werden sie durch Spritzen in einer Trockenschichtdicke von 8 bis 50 µm appliziert, für Effektwasserbasislacke liegt die Trockenschichtdicke beispielsweise bevorzugt bei 10 bis 25 µm, für unifarbige Wasserbasislacke liegt sie bevorzugt höher, beispielsweise bei 10 bis 40 µm. Die Applikation kann auch bei hohen Schichtdicken, beispielsweise 25 bis 50 µm, in einem Spritzgang durchgeführt werden, da die erfindungsgemäßen wäßrigen Überzugsmittel eine hohe Ablaufgrenze aufweisen. Mehrere Spritzgänge und ein damit verbundenes Zwischentrocknen oder Zwischenablüften können vermieden werden. Die Applikation erfolgt bevorzugt im Naß-in-Naß-Verfahren, d.h. nach einer Ablüftphase, z.B. bei 20 bis 80°C, werden die Wasserbasislackschichten mit einem üblichen Klarlack in einer Trockenschichtdicke von bevorzugt 30 bis 60 µm überlackiert und gemeinsam mit diesem bei Temperaturen von beispielsweise 20 bis 150°C getrocknet oder vernetzt. Die Trocknungsbedingungen der Decklackschicht (erfindungsgemäßer Wasserbasislack und Klarlack) richten sich nach dem verwendeten Klarlacksystem. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Als Klarlack sind grundsätzlich alle bekannten Klarlacke oder transparent pigmentierten Überzugsmittel geeignet. Hierbei können sowohl lösungsmittelhaltige 1- oder 2-Komponenten-Klarlacke, wasserverdünnbare Klarlacke, Pulverklarlacke, wäßrige Pulverklarlackslurries oder durch Strahlung härtbare Klarlacke eingesetzt werden.

So erstellte Mehrschichtlackierungen können auf verschiedenste Arten von Substraten aufgebracht werden. Im allgemeinen handelt es sich um metallische oder Kunststoff-Untergründe. Diese sind häufig vorbeschichtet, d.h. Kunststoffsubstrate können z.B. mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten, wie z.B. eine Füllerschicht. Diese Schichten sind im allgemeinen ausgehärtet.

Mit den erfindungsgemäßen Wasserbasislacken erhaltene Mehrschichtlackierungen entsprechen den heute üblichen Anforderungen in der Kraftfahrzeuglackierung. Die erfindungsgemäßen Wasserbasislacke sind somit geeignet für die Fahrzeugerstlackierung und -reparaturlackierung, sie können jedoch auch in anderen Bereichen, z.B. der Kunststofflackierung, insbesondere der Fahrzeugteilelackierung, eingesetzt werden.

Die Erfindung betrifft weiterhin ein Substrat, beschichtet mit einem Mehrschichtüberzug, der erhalten worden ist durch Aufbringen mindestens einer Grundierungsschicht, bevorzugt auf Basis eines wasserverdünnbaren Überzugsmittels, Aufbringen einer farb- und/oder effektgebenden Basislackschicht mit einem erfindungsgemäßen wäßrigen Überzugsmittel, gegebenenfalls Trocknen der Basislackschicht und Aufbringen eines transparenten Überzugsmittels als Deckschicht und anschließende Erhitzung des beschichteten Substrates. Es können zu dieser Mehrschichtlackierung gegebenenfalls weitere zusätzliche Schichten hinzugefügt werden.

Die erfindungsgemäßen wäßrigen Überzugsmittel weisen eine hohe Ablaufgrenze auf und sind insbesondere als Wasserbasislacke zur Erstellung der farb- und/oder effektgebenden Überzugsschicht innerhalb einer Mehrschichtlackierung geeignet. Die erfindungsgemäßen Wasserbasislacke können in nur einem Spritzgang auch in hoher Schichtdicke appliziert werden, was bei der Applikation von Lackschichten mit schlecht deckenden Farbtönen besondere Bedeutung besitzt.

### Herstellungsbeispiel 1:

145,4 g eines Polyesters aus Adipinsäure, Neopentylglykol und Isophthalsäure (OH-Zahl: 109 mg KOH/g) und 8,0 g Dimethylolpropionsäure werden in 69,6 g N-Methylpyrrolidon gelöst und auf 40°C erwärmt. Danach werden 55,8 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 7,0 g 3-Aminopropyltriethoxysilan, 12,2 g Dodecanol und 2,0 g Hydroxyethylmethacrylat zugegeben. Die Reaktionsmischung wird solange bei 80°C gehalten bis keine freien NCO-Gruppen mehr nachweisbar sind (Titration). Dann werden 128,0 g Methylmethacrylat zugegeben. Es werden 5,4 g Triethylamin und 5,4 g deionisiertes Wasser zugegeben und gut eingearbeitet. Nach der Zugabe von 864,0 g deionisierten Wassers erhält man eine feinteilige wäßrige Dispersion. Nun werden 250,0 g Butylacrylat, 125,0 g tert.-Butylacrylat und eine Lösung aus 62,0 g deionisierten Wassers und 2,0 g Ammoniumperoxodisulfat bei 80°C über 2 h kontinierlich zugegeben. Anschließend wird 3 h bei 80°C gehalten mit deionisiertem Wasser auf einen Festkörper (60' 150°C) von 40,0 Gew.-% eingestellt.

### Herstellungsbeispiel 2:

339,0 g eines Polyesters aus Adipinsäure, Neopentylglykol und Cyclohexandicarbonsäure (OH-Zahl 104 mg KOH/g) und 13,7 g Dimethylolpropionsäure werden in 160,0 g N-Methylpyrrolidon gelöst und auf 40°C erwärmt. Danach werden 125,0 g Isophorondiisocyanat so zugegeben, daß eine Reaktionstemperatur von 80°C nicht überschritten wird. Es wird solange gehalten bis ein NCO-Gehalt von 2 % (bezogen auf Festharz und bestimmt nach DIN 53185) erreicht ist. Danach werden nacheinander 43,8 g 3-Aminopropyltriethoxysilan, 4,5 g Diethanolamin und 20,2 g Hydroxyethylmethacrylat zugegeben. Die Reaktionsmischung wird solange bei 80°C gehalten, bis keine freien NCO-Gruppen mehr nachweisbar sind (Titration). Dann werden 128,0 g Methylmethacrylat zugegeben. Es werden 9,2 g Triethylamin und 9,2 g deionisiertes Wasser zugegeben und gut eingearbeitet. Nach der Zugabe von 1300,0 g deionisierten Wassers erhält man eine feinteilige wäßrige Dispersion. Nun werden 240,0 g Butylacrylat, 175,0 g tert.-Butylacrylat und eine Lösung aus 100,0 g deionisierten Wassers und 4,0 g Ammoniumperoxodisulfat bei 80°C über 2 h kontinuierlich zugegeben. Anschließend wird 3 h bei 80°C gehalten und mit deionisiertem Wasser auf einen Festkörper (60' 150°C) von 40,0 Gew.-% eingestellt.

### Herstellungsbeispiel 3:

772,0 g eines Polyesters aus Adipinsäure, Neopentylglykol und Isophthalsäure (OH-Zahl 100 mg KOH/g) und 89,0 g Dimethylolpropionsäure werden in 412,0 g N-Methylpyrrolidon gelöst und auf 40°C erwärmt. Danach werden 375,0 g Isophorondiisocyanat so zugegeben, daß eine Reaktionstemperatur von 80°C nicht überschritten wird. Es wird solange gehalten, bis ein NCO-Gehalt von 2 % (bezogen auf Festharz und bestimmt nach DIN 53185) erreicht ist. Danach werden nacheinander 41,0 g 3-Aminopropyltriethoxysilan, 72,0 g Dodecanol und 12,0 g Hydroxyethylmethacrylat zugegeben. Die Reaktionsmischung wird solange bei 80°C gehalten bis keine freien NCO-Gruppen mehr nachweisbar sind (Titration). Dann werden 886,0 g Methylmethacrylat zugegeben. Es werden 60,0 g Triethylamin zugegeben und gut eingearbeitet. Nach der Zugabe von 4500,0 g deionisierten Wassers erhält man eine feinteilige wäßrige Dispersion. Nun werden 890,0 g Butylacrylat, 890,0 g tert.-Butylacrylat und eine Lösung aus 850,0 g deionisierten Wassers und 50,0 g Ammoniumperoxodisulfat bei 80°C über 2 h kontinuierlich zugegeben. Anschließend wird 3h bei 80°C gehalten und mit deionisiertem Wasser auf einen Festkörper (60' 150°C) von 40,0 Gew.-% eingestellt.

### Herstellungsbeispiel 4:

697,3 g eines Polyesters aus Adipinsäure, Neopentylglykol und Isophthalsäure (OH-Zahl 100 mg KOH/g) und 80,0 g Dimethylolpropionsäure werden in 372,0 g N-Methylpyrrolidon gelöst und auf 40°C erwärmt. Danach werden 338,0 g Isphorondiisocyanat so zugegeben, daß eine Reaktionstemperatur von 80°C nicht überschritten wird. Es wird so lange gehalten, bis ein NCO-Gehalt von 2 % (bezogen auf Festharz und bestimmt nach DIN 53185) erreicht ist. Danach werden nacheinander 37,2 g 3-Aminopropyltriethoxysilan, 65,0 Dodecanol und 13,0 g Hydroxethylmethacrylat zugegeben. Die Reaktionsmischung wird solange bei 80°C gehalten bis keine freien NCO-Gruppen mehr nachweisbar sind (Titration). Dann werden 400,0 g Methylmethacrylat zugegeben. Es werden 54,2 g Triethylamin und 54,2 g deionisiertes Wasser zugegeben und gut eingearbeitet. Nach der Zugabe von 3900,0 g deionisierten Wassers erhält man eine feinteilige wäßrige Dispersion. Nun werden 1333,0 g Butylacrylat, 663,0 g tert.-Butylacrylat und eine Lösung aus 1000,0 g deionisierten Wassers und 40,0 g Ammoniumperoxodisulfat bei 80°C über 2h kontinuierlich zugegeben. Anschließend wird 3h bei 80°C gehalten und mit deionisiertem Wasser auf einen Festkörper (60' 150°C) von 40,0 Gew.-% eingestellt.

### Herstellungsbeispiel 5:

776,5 g eines Polyesters aus Adipinsäure, Neopentylglykol und Isophthalsäure (OH-Zahl 109 mg KOH/g) und 42,8 g Dimethylolpropionsäure werden in 372,0 g N-Methylpyrrolidon gelöst und auf 40°C erwärmt. Danach werden 298,0 g Isophorondiisocyanat so zugegeben, daß eine Reaktionstemperatur von 80°C nicht überschritten wird. Es wird solange gehalten, bis ein NCO-Gehalt von 2 % (bezogen auf Festharz und bestimmt nach DIN 53185) erreicht ist. Danach werden nacheinander 94,5 g 3-Aminopropyltriethoxysilan, 65,0 g Dodecanol und 11,1 g Hydroxyethylmethacrylat zugegeben. Die Reaktionsmischung wird solange bei 80°C gehalten bis keine freien NCO-Gruppen mehr nachweisbar sind (Titration). Dann werden 415,0 g Methylmethacrylat zugegeben. Zur Neutralisation werden 29,0 g Triethylamin und 29,0 g deionisierten Wassers zugegeben und gut eingearbeitet. Nach der Zugabe von 2880,0 g deionisierten Wassers erhält man eine feinteilige wäßrige Dispersion. Nun werden 470,0 g Butylacrylat, 440,0 g tert.-Butylacrylat und eine Lösung aus 450,0 g deionisiertem Wasser und 8,0 g Ammoniumperoxodisulfat bei 80°C über 2h kontinuierlich zugegeben. Anschließend wird 3h bei 80°C gehalten und mit deionisiertem Wasser auf einen Festkörper (60' 150°C) von 40,0 Gew.-% eingestellt.

### Lackbeispiel 1

### 1.1 Herstellung eines unifarbenen, roten Wasserbasislacks

300 g eines üblichen Pastenharzes (gemäß Beispiel aus DE-A-40 00 889) werden mit 350 g eines handelsüblichen Küpenpigmentes (Colourindex Red 168) vermischt. Mit Dimethylethanolamin wird auf pH 8,5 und durch Zugabe von deionisiertem Wasser auf einen Festkörper von 50 Gew.-% eingestellt. Danach wird in einer Perlmühle transparent ausdispergiert.

### 1.2

1,4 g eines handelsüblichen Verdickers auf Polyacrylsäurebasis (Festkörper: 10 Gew.-%, pH-Wert 7,5) werden mit 129 g der Dispersion aus Herstellungsbeispiel 1 und 40 g des Pastenharzes aus Beispiel 1.1 gemischt. Anschließend werden unter Rühren 24 g eines handelsüblichen, wasserunlöslichen Melaminharzes (Setamine US 138/BB 70 der Firma AKZO) unter Rühren zugesetzt. Anschließend werden 10 g der Rotpaste aus Beispiel 1.1 zugesetzt und homogen eingerührt. Mit deionisiertem Wasser wird auf Applikationsviskosität eingestellt.

### 1.3 Aufbringen des Wasserbasislacks und eines Klarlacks

Der erhaltene Wasserbasislack wird auf ein übliches, phosphatiertes und durch kathodische Tauchlackierung und mit Füller vorbeschichtetes Karosserieblech durch Spritzen in einer Trockenschichtdicke von 30 µm aufgebracht. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine den üblichen Anforderungen in der Automobilserienlackierung gerecht werdende Mehrschichtlackierung.

Weiterhin wird der erhaltene Wasserbasislack auf ein übliches, phosphatiertes und durch kathodische Tauchlackierung und mit Füller vorbeschichtetes Karosserieblech durch Spritzen im Keil (Trockenschichtdicke 0 bis 50 µm) aufgebracht. Dies geschieht mittels eines Lackierautomaten ohne Zwischenablüften. Die Ablaufgrenze beträgt 40 µm.

### Lackbeispiel 2

Lackbeispiel 1 wird wiederholt mit dem Unterschied, daß anstelle der Dispersion aus Herstellungsbeispiel 1 die Dispersion aus Herstellungsbeispiel 2 verwendet wird. Ein Ablaufen war nicht zu beobachten, d.h. die Ablaufgrenze beträgt über 50 µm.

### Lackbeispiel 3

### Herstellung einer Silber-Metallic-Zweischichtlackierung

20 g einer handelsüblichen, für Wasserbasislack geeigneten Aluminiumpaste mit 65 Gew.-% Aluminium, 20 g Butylglykol, 6 g N-Methylpyrrolidon und 1 g eines handelsüblichen Netzmittels werden miteinander zum Bronzeaufschluß vermischt. Danach werden 1,4 g eines handelsüblichen Verdickers auf Polyacrylsäurebasis (Festkörper: 10 Gew.-%, pH-Wert 7,5) hinzugemischt. Danach werden 129 g der Dispersion aus Herstellungsbeispiel 1 und 40 g des Pastenharzes aus Lackbeispiel 1.1 in den Bronzeaufschluß eingerührt. Anschließend werden unter Rühren 24 g eines handelsüblichen, wasserunlöslichen Melaminharzes (Setamine US 138/BB 70 der Firma Akzo) unter Rühren zugesetzt. Mit deionisiertem Wasser wird auf Applikationsviskosität eingestellt.

Der erhaltene Wasserbasislack wird auf ein übliches, phosphatiertes und durch kathodische Tauchlackierung und mit Füller vorbeschichtetes Karosserieblech durch Spritzen aufgebracht. Dies geschieht in einer Trockenschichtdicke von 15 µm. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine den üblichen Anforderungen in der Automobilserienlackierung gerecht werdende mehrschichtige Metalliclackierung.

Weiterhin wird der erhaltene Wasserbasislack auf ein übliches, phosphatiertes und durch kathodische Tauchlackierung und mit Füller vorbeschichtetes Karosserieblech durch Spritzen im Keil (Trockenschichtdicke 0 bis 50 µm) aufgebracht. Dies geschieht mittels eines Lackierautomaten ohne Zwischenablüften. Die Ablaufgrenze beträgt 30 µm.

### Lackbeispiel 4

Lackbeispiel 3 wird wiederholt mit dem Unterschied, daß anstelle der Dispersion aus Herstellungsbeispiel 1 die Dispersion aus Herstellungsbeispiel 2 verwendet wird. Die Ablaufgrenze beträgt 45 µm.

## Patentansprüche

1. Wäßrige Überzugsmittel auf der Basis von einem oder mehreren Bindemitteln, sowie gegebenenfalls Vernetzern, Pigmenten und/oder Füllstoffen, lacktechnischen Additiven und/oder Lösemitteln, dadurch gekennzeichnet, daß sie als Bindemittel eine wäßrige Dispersion auf der Basis von Polyurethan/Polymerisat-Polymerhybriden mit einem Zahlenmittel der Molmasse (Mn) von 8000 bis 1500000, einem Gewichtsverhältnis von Polyurethan- zu Polymerisatanteil von 0,05 : 1 bis 50 : 1, einer Hydroxylzahl von 0 bis 150 mg KOH/g, bezogen auf Festharz, wobei an Silizium gebundene Hydroxylgruppen bei der Berechnung der OH-Zahl nicht mitgezählt werden, und einer Säurezahl von 1,5 bis 40 mg KOH/g, bezogen auf Festharz und einem Gehalt von 0,5 bis 150 mmol Silizium pro 100 g Festharz in Form von in den Polyurethananteil eingebundenen Siloxanbrücken (-Si-O-Si-) und/oder in Form von an den Polyurethananteil gebundenen Silanolgruppen enthalten, wobei der Polymerisatanteil auf olefinisch ungesättigten Monomeren basiert.

2. Wäßrige Überzugsmittel nach Anspruch 1, dadurch gekennzeichnet, daß das Hybridpolymer ein Polyurethan/Poly(meth)acrylat-Polymerhybrid ist.

3. Wäßrige Überzugsmittel nach Anspruch 1 oder 2, dadurch gekennzeichnet, daß mindestens 80 % der die Säurezahl bildenden Säuregruppen Bestandteil des Polyurethananteils des Polymerhybriden sind.

4. Wäßrige Überzugsmittel nach einem der vorhergehenden Ansprüche, dadurch gekennzeichnet, daß sie einen Festkörpergehalt von 10 bis 50 Gew.-% aufweisen.

5. Wäßrige Überzugsmittel nach einem der vorhergehenden Ansprüche, dadurch gekennzeichnet, daß sie 0 bis 75 Gew.-% eines oder mehrerer weiterer Bindemittel, bezogen auf den Gesamtfestkörpergehalt der vorhandenen Bindemittel, aufweisen.

6. Wäßrige Überzugsmittel nach einem der vorhergehenden Ansprüche, dadurch gekennzeichnet, daß sie einen oder mehrere Vernetzer im Verhältnis zu den Bindemitteln von 10 : 90 bis 40 : 60, jeweils bezogen auf das Festkörpergewicht, enthalten.

7. Wäßrige Überzugsmittel nach einem der vorhergehenden Ansprüche, dadurch gekennzeichnet, daß sie einen Lösemittelgehalt von unter 20 Gew.-% aufweisen.

8. Verfahren zur Herstellung von wäßrigen Überzugsmitteln, dadurch gekennzeichnet, daß man eine wäßrige Bindemitteldispersion auf der Basis von Hybridpolymeren herstellt, wobei man ein Säuregruppen enthaltendes Polyurethan-Prepolymer, das durchschnittlich 0,1 bis 2 einer radikalischen Copolymerisation zugängliche olefinisch ungesättigte Gruppen pro Molekül und durchschnittlich 0,7 bis 9 an Silizium gebundene R'0-Gruppen pro Molekül aufweist, worin
R' = C1- bis C8-Alkyl oder C(O)R"', und
R"' = C1- bis C10-Alkyl
bedeuten, und das in einem gegenüber Isocyanat inerten Lösemittel gelöst vorliegen kann, gegebenenfalls nach vorheriger Neutralisation der Säuregruppen durch Zusatz von Wasser in eine wäßrige Dispersion überführt, danach gemeinsam mit olefinisch ungesättigten Monomeren einer radikalischen Polymerisation unterwirft und die erhaltene Dispersion durch Zusatz von gegebenenfalls Vernetzern, Pigmenten und/oder Füllstoffen, lacktechnischen Additiven und/oder Lösemitteln zu einem Überzugsmittel formuliert.

9. Verfahren zur Herstellung von Mehrschichtüberzügen durch Aufbringen mindestens einer Grundierungsschicht, einer farb- und/oder effektgebenden Basislackschicht sowie einer transparenten Decklackschicht auf ein Substrat, dadurch gekennzeichnet, daß die Basislackschicht unter Verwendung eines wäßrigen Überzugsmittels gemäß einem der Ansprüche 1 bis 7 aufgetragen wird.

10. Verfahren nach Anspruch 9, dadurch gekennzeichnet, daß es zur Lackierung von Kraftfahrzeugen oder deren Teilen durchgeführt wird.

11. Verwendung der wäßrigen Überzugsmittel nach einem der Ansprüche 1 bis 7 zur Herstellung von Mehrschichtlackierungen, insbesondere auf dem Kraftfahrzeugsektor.

## Claims

1. Aqueous coating compositions based on one or more binders, optionally together with crosslinking agents, pigments and/or extenders, lacquer additives and/or solvents, characterised in that they contain as binder an aqueous dispersion based on polyurethane/polymer polymer hybrids having a number average molecular weight (Mn) of 8000 to 1500000, a weight ratio of the polyurethane to polymer fraction of 0.05:1 to 50:1, a hydroxyl value of 0 to 150 mg of KOH/g, relative to solid resin, wherein hydroxyl groups attached to silicon are not included in the calculation of the OH value, and an acid value of 1.5 to 40 mg of KOH/g, relative to solid resin, and a content of 0.5 to 150 mmol of silicon per 100 g of solid resin in the form of siloxane linkages (-Si-O-Si-) incorporated into the polyurethane fraction and/or in the form of silanol groups attached to the polyurethane fraction, wherein the polymer fraction is based on olefinically unsaturated monomers.

2. Aqueous coating compositions according to claim 1, characterised in that the hybrid polymer is a polyurethane/poly(meth)acrylate polymer hybrid.

3. Aqueous coating compositions according to claim 1 or 2, characterised in that at least 80% of the acid groups constituting the acid value are a constituent of the polyurethane fraction of the polymer hybrid.

4. Aqueous coating compositions according to one of the preceding claims, characterised in that they have a solids content of 10 to 50 wt.%.

5. Aqueous coating compositions according to one of the preceding claims, characterised in that they comprise 0 to 75 wt.% of one or more further binders, relative to the total solids content of the binders present.

6. Aqueous coating compositions according to one of the preceding claims, characterised in that they contain one or more crosslinking agents in a ratio to the binders of 10:90 to 40:60, in each case relative to the solids weight.

7. Aqueous coating compositions according to one of the preceding claims, characterised in that they have a solvent content of below 20 wt.%.

8. Process for the production of aqueous coating compositions, characterised in that an aqueous binder dispersion based on hybrid polymers is produced, wherein an polyurethane prepolymer containing acid groups, said prepolymer comprising on average 0.1 to 2 olefinically unsaturated groups accessible to free-radical copolymerisation per molecule and on average 0.7 to 9 R'O groups attached to silicon per molecule, in which
R' means C₁-C₈ alkyl or C(O)R''', and
R''' means C₁-C₁₀ alkyl,
and possibly assuming the form of a solution in a solvent which is inert towards isocyanate, is converted into an aqueous dispersion by addition of water, optionally after prior neutralisation of the acid groups, and is then, together with olefinically unsaturated monomers, subjected to free-radical polymerisation and the resultant dispersion is formulated to yield a coating composition by optionally adding crosslinking agents, pigments and/or extenders, lacquer additives and/or solvents.

9. Process for the production of multilayer lacquer coatings by applying at least one priming layer, a coloured and/or effect base lacquer layer as well as a transparent topcoat layer onto a substrate, characterised in that the base lacquer layer is applied by using an aqueous coating composition according to one of claims 1 to 7.

10. Process according to claim 9, characterised in that it is performed for lacquer coating motor vehicles or the components thereof.

11. Use of the aqueous coating compositions according to one of claims 1 to 7 for the production of multilayer lacquer coatings, in particular in the automotive sector.

## Revendications

1. Revêtement aqueux à base d'un ou plusieurs liants, ainsi que le cas échéant d'agents réticulants, de pigments et/ou de charges, d'additifs industriels pour vernis et/ou de solvants, caractérisé en ce qu'ils contiennent comme liant une dispersion aqueuse à base d'hybrides polymères polyuréthane/produit de polymérisation ayant une masse molaire moyenne en nombre (Mn) de 8000 à 1 500 000, un rapport pondéral de la partie uréthane à la partie produit de polymérisation de 0,05:1 à 50:1, un indice d'hydroxyle de 0 à 150 mg de KOH/g, par rapport à la résine solide, le groupes hydroxyles liés au silicium n'étant pas compris dans le calcul de l'indice d'OH, et un indice d'acide de 1,5 à 40 mg de KOH/g, par rapport à la résine solide et une teneur de 0,5 à 150 mmole de silicium pour 100 g de résine solide sous forme de ponts siloxane (-Si-O-Si-) intégrés dans la partie polyuréthane et/ou sous forme de groupes silanol liés à la partie polyuréthane, la partie produit de polymérisation étant à base d'un monomère oléfiniquement insaturé.

2. Revêtement aqueux selon la revendication 1, caractérisé en ce que le polymère hybride est un hybride de polymère polyuréthane/poly(méth)acrylate.

3. Revêtement aqueux selon la revendication 1 ou 2, caractérisé en ce qu'au moins 80 % des groupes acides formant l'indice d'acide sont des composants de la fraction polyuréthane de l'hybride polymère.

4. Revêtements aqueux selon l'une des revendications précédentes, caractérisés en ce qu'ils ont une teneur en solides de 10 à 50 % en poids.

5. Revêtements aqueux selon l'une des revendications précédentes, caractérisés en ce qu'ils présentent de 0 à 75 % en poids d'un ou plusieurs autres liants, par rapport à la teneur totale en solides du liant présent.

6. Revêtements aqueux selon l'une des revendications précédentes, caractérisés en ce qu'ils contiennent un ou plusieurs agents réticulants dans un rapport aux liants de 10:90 à 40:60, toujours par rapport au poids de solides.

7. Revêtements aqueux selon l'une des revendications précédentes, caractérisés en ce qu'ils présentent une teneur en solvants inférieure à 20 % en poids.

8. Procédé de production de revêtements aqueux, caractérisé en ce qu'on prépare une dispersion aqueuse de liants à base de polymères hybrides, où l'on transforme en une dispersion aqueuse par addition d'eau un prépolymère de polyuréthane contenant des groupes acides, qui présentent en moyenne de 0,1 à 2 groupes oléfiniquement insaturés accessibles à une copolymérisation radicalaire par molécule et en moyenne de 0,7 à 9 groupes R'O liés au silicium par molécule, où
R' = alkyle en C₁ à C₈ ou C(O)R''', et
R''' = alkyle en C₁ à C₁₀
et qui peut se présenter sous forme dissoute dans un solvant inerte vis-à-vis de l'isocyanate, le cas échéant après neutralisation préalable des groupes acides par addition d'eau, puis en ce qu'on la soumet en même temps que des monomères oléfiniquement insaturés, à une polymérisation radicalaire, et en ce qu'on formule la dispersion obtenue par addition, le cas échéant, d'agents réticulants, de pigments et/ou de charges, d'additifs industriels pour vernis et/ou de solvants, pour obtenir un revêtement.

9. Procédé de production de revêtements à plusieurs couches par dépôt au moins d'une couche d'apprêt, d'une couche de vernis de base fournissant une couleur et/ou un effet ainsi que d'une couche de vernis de revêtement transparent sur un substrat, caractérisé en ce qu'on dépose la couche de vernis de base en utilisant un produit de revêtement aqueux selon l'une des revendications 1 à 5.

10. Procédé selon la revendication 9, caractérisé en ce qu'on le réalise pour le vernissage des véhicules automobiles ou des pièces de véhicules automobiles.

11. Utilisation des produits de revêtement aqueux selon l'une des revendications 1 à 7 pour la production d'enduits à plusieurs couches, en particulier dans le secteur des véhicules automobiles.
